# EUROPEAN PATENT SPECIFICATION

(11) **EP 2 499 917 B1**
(45) Date of publication and mention of the grant of the patent: **21.09.2016**
(21) Application number: 12159613.4
(22) Date of filing: 15.03.2012
(51) Int. Cl.: A01N 63/00, A01N 63/04, A01N 65/42, A01N 59/06, A01P 3/00, C05D 3/00, C05F 11/08

(54) **FORMULATION AND METHOD FOR TREATING PLANTS TO CONTROL OR SUPPRESS A PLANT PATHOGEN**
Formulierung und Verfahren zur Behandlung von Pflanzen zur Bekämpfung oder Unterdrückung von Pflanzenkrankheitserregern
Formulation et procédé de traitement de plantes pour contrôler ou supprimer un pathogène de plante

(30) Priority: 15.03.2011 US 201113048047
(43) Date of publication of application: 19.09.2012
(73) Proprietor: Brower, William, Fortville, IN 46040 (US)
(72) Inventor: Brower, William, Fortville, IN 46040 (US)
(74) Representative: Webster, Jeremy Mark

(56) References cited:
- EP-A1- 1 241 247
- WO-A1-00/36085
- WO-A1-00/51435
- WO-A1-00/64837
- WO-A1-94/19950
- WO-A1-99/05257
- WO-A1-2004/002227
- WO-A1-2006/017361
- WO-A2-01/52869
- WO-A2-02/091824
- DE-A1- 19 739 364
- US-A- 5 288 488
- BAN S ET AL: "Prevention of soil disease in plants - comprises using root fungi of VA fungi and resistant fungi", WPI / THOMSON,, vol. 1993, no. 37, 2 July 1993 (1993-07-02), XP002556676,
- "Fertiliser prodn. - involves culturing leguminous, photosynthetic and sulphur bacterial and mixing with cultured nitrifying, cellulose decomposing etc. bacteria", WPI / THOMSON,, vol. 1985, no. 12, 12 February 1985 (1985-02-12), XP002556661,
- KITAMURA A ET AL: "Soil phytopathogenic antifungal organic compsn. - contg. mixt. of photo-synthetic bacteria and plant extract residue and/or drainage waste sludge", WPI / THOMSON,, vol. 1988, no. 25, 12 May 1988 (1988-05-12), XP002556660,
- MIURA T: "Microbial antagonists - are fermentative mixtures comprising organic substances of animal and plant origin, organic mud, nutrients and microorganisms", WPI / THOMSON,, vol. 1990, no. 19, 30 March 1990 (1990-03-30), XP002556659,

## Description

### FIELD OF THE INVENTION

The present invention relates generally to formulations and methods for controlling and suppressing plant pathogens, and more particularly to formulations and methods for controlling and suppressing plant pathogens with a "booster" that enhances the activity of antagonistic microorganisms such as bacteria and yeasts.

### BACKGROUND OF THE INVENTION

Plants including many commercially valuable cultivars ranging from fruit trees and crop plants to ornamental shrubs are affected by a wide variety of microorganisms, including bacterial and fungal pathogens. These pathogenic microorganisms cause great damage, and a great deal of time and expense is devoted to trying to protect plants from these pathogens and/or to minimize the damage they do once they infect a plant.

Applicant's prior work has developed antagonistic microorganisms including mixtures of bacteria and/or fungi that may be used to fight and/or treat pathogenic microorganisms. A more universal approach is desired though, and particularly an approach that improves the efficacy of a broad range of antagonistic bacteria and/or fungi. Of particular interest would be a formulation that improves the performance of antagonistic bacteria and/or fungi under either pre-harvest or post-harvest conditions.

WO 2006/017361 describes formulations and methods for controlling or suppressing bacterial or fungal plant pathogens. The formulation includes at least one beneficial species of bacteria, at least one beneficial fungi, a nutrient, and at least one compound that extends the length of time that the formulation remains effective.

A need therefore exists for formulations that may be used to improve the performance of a wide variety of antagonistic bacteria and/or fungi under either pre-harvest or post-harvest conditions. Embodiments of the present invention address that need.

### SUMMARY

Briefly describing one aspect of the present invention, there is provided a formulation according to claim 15 comprising a
"booster" formulation for enhancing the activity of an antagonistic microorganism. The booster formulation preferably comprises kaolin clay, a calcium salt, yeast
extract, and Yucca plant extract. The four components are preferably provided in a ratio of about 3:1:1:1 by weight.

The booster formulations are used in conjunction with one or more antagonistic microorganisms. In preferred embodiments the antagonistic microorganism may comprise an antagonistic yeast. In other preferred embodiments the antagonistic microorganism may comprise an antagonistic bacteria.

Another aspect of the present invention is a method according to claim 1 for improving the
ability of an antagonistic microorganism to control plant pathogens. The inventive method comprises contacting a plant with a formulation comprising an antagonistic microorganism and a booster composition, with the booster composition preferably comprising: a) about 3 parts kaolin clay; b) about 1 part yeast extract; c) about 1 part Yucca plant extract; and d) about 1 part calcium-source material.

Preferably, the method comprises
contacting the plant with a formulation comprising an antagonistic microorganism and a booster composition, with the booster composition comprising: a) about 3 parts kaolin clay; b) about 1 part yeast extract; c) about 1 part Yucca plant extract; d) about 1 part calcium-source material; and e) between about 0.02 parts and about 0.5 parts antagonistic microorganisms, by weight.

Suitability in this and other aspects of the embodiments a) is about 30% to 60% Kaolin clay, by weight; b) is about 15% to 20% yeast extract, by weight; c) is about 15% to 20% Yucca plant extract, by weight; and d) is about 15% to 20% calcium-source material. The antagonistic microorganism is present in the formulation.

As for preferred relative amounts of each of a) to d), this is discussed below.

The formulations described herein,
for example a "booster" formulation as described herein, can be used for treating plants by enhancing the activity of an antagonistic microorganism. Suitably the use is for improving the ability of the antagonistic microorganism to prevent, suppress, treat or control disease or decay in plants. Suitably this includes their fruits and/or harvestable parts.

In embodiments of the present invention the formulation is dispersed in an aqueous preparation and includes between 0.68 and 4.45 kg (1.5 and 10 pounds) of kaolin clay per 378.54 L (100 gallons) of aqueous preparation.

In embodiments of the present invention the calcium source material comprises a calcium salt, which may be calcium glucoheptonate, calcium chloride, calcium sulfate, or calcium carbonate, and is preferably calcium glucoheptonate

In embodiments of the present invention the antagonistic microorganism comprises one or more beneficial bacteria, which may be selected from the group consisting of: *Bacillus subtilis, Baccillus licheniformis, Bacillus axotoformans, Bacillus megaterium, Bacillus coagulans, Bacillus pumulis, Bacillus thurengiensis, Bacillus stearotermophilis, Paenbacillius polymyxa, Paenibaccillus durum, Azotobactor chroococcum, Pseudomonas aureofaceans,* and *Pseudomonas fluorescence.*

In embodiments of the present invention the antagonistic microorganism comprises one or more beneficial fungi, which may comprise *Monilinia fructicola.*

In embodiments of the present invention the antagonistic microorganism
include one or more beneficial yeasts, which may be elected from the group consisting of. *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp; and Hansenula spp.,* and preferably comprises *Candida saitoana.*

The method of applying the formulation may be selected from the group consisting of, spraying, dusting, and drenching said plant with said formulation.

Among the preferred embodiments are the following:
1. A method for improving the ability of an antagonistic microorganism to prevent, suppress, treat or control disease or decay in plants, including their fruits and/ or harvestable parts, the method comprising contacting a plant with a formulation comprising an antagonistic microorganism and a booster composition, wherein said booster composition comprises:
   a) about 3 parts Kaolin clay;
   b) about 1 part yeast;
   c) about 1 part Yucca plant extract; and
   d) about 1 part calcium-source material.
2. A method according to preferred embodiment 1 wherein the method comprises contacting the plant with a formulation comprising about 3 parts Kaolin clay, about 1 part yeast extract, about 1 part calcium-source material, about 1 part Yucca extract, and about 0.04 parts antagonistic microorganisms, by weight.
3. A method according to any of preferred embodiments 1-2 wherein the formulation is dispersed in an aqueous preparation and includes between 0.68 and 4.54 kg (1.5 and 10 pounds) of Kaolin clay per 378.54 L (100 gallons) of aqueous preparation.
4. A method according to any of preferred embodiments 1-3 wherein the calcium source material comprises a calcium salt.
5. A method according to preferred embodiment 4 wherein said calcium salt comprises calcium glucoheptonate, calcium chloride, calcium sulfate, or calcium carbonate.
6. A method according to preferred embodiment 4 wherein said calcium salt comprises calcium glucoheptonate
7. A method according to any of preferred embodiments 1-6 wherein the antagostic microorganism comprises one or more beneficial bacteria.
8. A method according to any of preferred embodiments 1-7 wherein the antagonistic microorganism comprises one or more beneficial fungi.
9. A method according to preferred embodiment 8 wherein the one or more beneficial fungi comprises one or more beneficial yeasts.
10. A method according to preferred embodiment 7 wherein the one or more beneficial bacteria comprises one or more beneficial bacteria selected from the group consisting of: *Azotobactor chroococcum, Azobacter polymyxa, Azobacter vinleandii, Bacillus amyloliquefaciens, Bacillus azotoformans, Bacillus coagulans, Bacillus fluorescens, Baccillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenbacillius polymyxa, Pseudomonas aureofaceans, Pseudomonas fluorescens, Pseudomonas monteilii, Streptomyces griseoviridis,* and *Streptomyces lydicus.*
11. A method according to preferred embodiment 7 wherein the one or more beneficial bacteria comprises one or more beneficial bacteria selected from the group consisting of: *Azotobactor chroococcum, Azobacter polymyxa, Bacillus amyloliquafacians, Bacillus azotofomrans, Bacillus coagulans, Baccillus licheniformis, Bacillus megaterium, Bacillus pumulis, Bacillus stearothermophilis, Bacillus subtilus, Bacillus thurengiensis, Deinococcus erythromyxa, Paenibaccillus durum, Paenibaccillus gordonae, Paenbacillius polymyxa, Pseudomonas aureofaceans,* and *Pseudomonas fluorescence.*
12. A method according to preferred embodiment 8 wherein the one or more beneficial fungi comprises *Monilinia fructicola.*
13. A method according to preferred embodiment 9 wherein the one or more beneficial yeasts comprises one or more beneficial yeasts selected from the group consisting of. *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp; and Hansenula spp.*
14. A method according to preferred embodiment 13 wherein the one or more beneficial yeasts comprises *Candida saitoana.*
15. A method according to any of preferred embodiments 1-14 wherein said applying is performed by spraying, dusting, or drenching a plant with said formulation.
16. A method according to any of preferred embodiments 1-15 wherein said formulation is applied to a plant pre-harvest.
17. A method according any of preferred embodiments 1-15 wherein said formulation is applied to a plant post-harvest.
18. A formulation effective for preventing, suppressing, treating or controlling disease or decay in plants, including their fruits and/or harvestable parts; said formulation comprising an antagonistic microorganism and a booster composition, wherein said booster composition comprises:
   a) about 3 parts Kaolin clay;
   b) about 1 part yeast;
   c) about 1 part Yucca plant extract; and
   d) about 1 part calcium-source material.
19. A formulation according to preferred embodiment 18 wherein the method comprises contacting the plant with a formulation comprising about 3 parts Kaolin clay, about 1 part yeast extract, about 1 part calcium-source material, about 1 part Yucca extract, and about 0.04 parts antagonistic microorganisms, by weight.
20. A formulation according to preferred embodiment 18 wherein the formulation is dispersed in an aqueous preparation and includes between 0.68 and 4.54 kg (1.5 and 10 pounds) of Kaolin clay per 378.54 L (100 gallons) of aqueous preparation.
21. A formulation according to any of preferred embodiments 18-20 wherein the calcium source material comprises a calcium salt.
22. A formulation according to preferred embodiment 21 wherein said calcium salt comprises calcium glucoheptonate, calcium chloride, calcium sulfate, or calcium carbonate.
23. A formulation according to preferred embodiment 22 wherein said calcium salt comprises calcium glucoheptonate
24. A formulation according to any of preferred embodiments 18-23 wherein the antagostic microorganism comprises one or more beneficial bacteria.
25. A formulation according to any of preferred embodiments 18-24 wherein the antagonistic microorganism comprises one or more beneficial fungi.
26. A formulation according to preferred embodiment 25 wherein the one or more beneficial fungi comprises one or more beneficial yeasts.
27. A formulation according to preferred embodiment 24 wherein the one or more beneficial bacteria comprises one or more beneficial bacteria selected from the group consisting of: *Azotobactor chroococcum, Azobacter polymyxa, Azobacter vinleandii, Bacillus amyloliquefaciens, Bacillus azotoformans, Bacillus coagulans, Bacillus fluorescens, Bacillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenbacillius polymyxa, Pseudomonas aureofaceans, Pseudomonas fluorescens, Pseudomonas monteilii, Streptomyces griseoviridis,* and *Streptomyces lydicus.*
28. A formulation according to preferred embodiment 24 wherein the one or more beneficial bacteria comprises one or more beneficial bacteria selected from the group consisting of: *Azotobactor chroococcum, Azobacter polymyxa, Bacillus amyloliquafacians, Bacillus azotofomrans, Bacillus coagulans, Bacillus licheniformis, Bacillus megaterium, Bacillus pumulis, Bacillus stearothermophilis, Bacillus subtilus, Bacillus thurengiensis, Deinococcus erythromyxa, Paenibaccillus durum, Paenibaccillus gordonae, Paenbacillius polymyxa, Pseudomonas aureofaceans,* and *Pseudomonas fluorescence.*
29. A formulation according to preferred embodiment 25 wherein the one or more beneficial fungi comprises *Monilinia fructicola.*
30. A formulation according to preferred embodiment 26 wherein the one or more beneficial yeasts comprises one or more beneficial yeasts selected from the group consisting of. *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp; and Hansenula spp.*
31. A formulation according to preferred embodiment 26 wherein the one or more beneficial yeasts comprises *Candida saitoana.*
32. A formulation according to any of preferred embodiments 18-31 wherein said applying is performed by spraying, dusting, or drenching a plant with said formulation.
33. A formulation according to any of preferred embodiments 18-32 wherein said formulation is applied to a plant pre-harvest.
34. A formulation according any of preferred embodiments 18-32 wherein said formulation is applied to a plant post-harvest.

### BRIEF DESCRIPTION OF THE DRAWINGS

FIG. 1 is a table showing the effect of "Booster" on *M. fructicola* biocontrol activity.
FIG. 2 is a table depicting the USDA test results.

### DETAILED DESCRIPTION OF THE INVENTION

For the purposes of promoting an understanding of the principles of the invention, reference will now be made to certain embodiments and specific language will be used to describe the same. It will nevertheless be understood that no limitation of the scope of the invention is thereby intended. Any alterations and further modifications in the described processes, systems or devices, and any further applications of the principles of the invention as described herein, are contemplated as would normally occur to one skilled in the art to which the invention relates.

Before discussing the details of certain aspects of the formulations and methods of the present invention, certain terms used in the description and claims will be described. As used herein, antagonistic microorganisms are microorganisms that work to prevent, suppress, treat or control pre- or post-harvest disease or decay in plants, including their fruits and/ or harvestable parts. For example, the antagonistic microorganism may work to prevent, suppress, treat or control a pre-harvest disease state, such as a blight. Similarly, the antagonistic microorganisms may work to prevent, suppress, treat or control post-harvest decay, such as rot.

The antagonistic microorganism(s) may comprise a bacterium, a fungus, or something else. The antagonistic microorganism may be antagonistic to a plant pathogen which may itself be a bacterium, a fungus, or something else.

Suppression or suppressing generally refers to preventing a disease or pathogen from infecting or affecting a given plant or group of plants. When these terms are used herein no claim is made as to the actual mechanism of suppression, for example, a given suppressor may be acting as a biocide, bactericide, bacteriostat, fungicide, fungistat, insecticide, or it may interfere with one or more functions of a given pathogen that enables the pathogen to infect a given plant under a given set of environmental conditions, or by any other mechanism. All that is to be inferred by use of the terms suppression or suppressing is that a given formulation appears to prevent a plant from becoming symptomatic for infection or assault by at least one plant pathogen.

Similarly, control or controlling generally refers to limiting the economic damage done to a given plant or group of plants by limiting the damage done to the plants by at least one plant pathogen. When this term is used herein no claim is made as to the actual mechanism of pathogen control, for example, a given formulation may act to control a pathogen by acting as a bactericide, bacteriostat, fungicide, fungistat, insecticide, or by interfering with one or more functions of a given pathogen that enables the pathogen to infect a given plant under a given set of environmental conditions, or by any other mechanism. All that is to be inferred by use of the terms control or controlling is that a given formulation appears to reduce the amount of damage done by a plant pathogen to a given plant relative to a similarly situated plant that is likewise infected with the pathogen, but not exposed to the formulation.

The present invention provides methods and formulations for controlling or suppressing plant pathogens including, but not necessarily limited to, pathogenic bacteria and fungi. The group of plant pathogens that can be controlled using formulations made in accordance with various embodiments include, but are not limited to *Erwinia amylovora* the bacteria, which causes fire blight and the fungus *Venturia inaequalis,* which causes Apple Scab.

### 1. The Booster Formulation.

The present invention provides a formulation that promotes or "boosts" the performance of an antagonistic microorganism. The booster formulation preferably includes kaolin clay, yeast extract, Yucca plant extract, and a calcium-source material. The individual components, and their preferred amounts, are discussed in more detail below.

### a) Kaolin Clay.

The formulations of the present invention include significant amounts of kaolin clay. As is known to the art, kaolin is a naturally-occurring clay resulting from the weathering of aluminous minerals such as feldspar with kaolinite (Al₂Si₂O₅(OH)₄) as its principal constituent. It is a soft, earthy, usually white mineral, that is "generally regarded as safe" by the U.S. Food and Drug Administration.

In the formulations of the present invention the kaolin clay may be provided as a wettable powder that is processed to a very fine particle size, such as Surround^{®} WP by the Engelhard Corp., Iselin, NJ.

The amount of kaolin clay in the booster formulation may range from about 30% to about 60% of the formulation. More preferably the Kaolin clay comprises about 40% to about 60% of the booster formulation, and most preferably comprises about 50% of the booster formulation.

### b) Yeast extract.

The formulations of the present invention preferably include yeast extract. As is known to the art, yeast extract is generally a processed yeast product made by removing the yeast cell walls and extracting the cell contents.

The amount of yeast in the booster formulation may range from about 15% to about 20% of the formulation. Most preferably the yeast comprises about 1/6 of the booster formulation.

### c) Yucca Plant Extract.

The formulations of the present invention also include a yucca plant extract, which is preferably a soluble yucca plant extract derived from the *Yucca schidigera.*

The amount of yucca plant extract in the booster formulation may range from about 15% to about 20% of the formulation. Most preferably the yucca plant extract comprises about 1/6 of the booster formulation.

### d) Calcium-Source Material.

The formulations of the present invention also include a calcium-source material. In the preferred formulations the calcium-source material is a calcium salt, and is most preferably calcium carbonate, calcium chloride, calcium sulfate, or calcium glucoheptonate. Calcium glucoheptonate is the most preferred calcium-source material.

The amount of calcium-source material in the booster formulation may range from about 15% to about 20% of the formulation. Most preferably the calcium-source material comprises about 1/6 of the booster formulation.

### e. Relative Amounts.

The inventive booster formulation preferably includes about 3 parts kaolin clay; about 1 part yeast extract; about 1 part Yucca plant extract; and about 1 part calcium-source material. More generally, the inventive booster formulation includes from 2 parts to 4 parts kaolin clay; from 1 part to 1.5 parts yeast extract; from 1 part to 1.5 parts Yucca plant extract; and from 1 part to 1.5 parts calcium-source material.

When combined with an antagonistic microorganism the inventive formulation preferably includes about 3 parts kaolin clay, about 1 part yeast extract, about 1 part calcium-source material, about 1 part Yucca extract, and about 0.02 parts to 0.5 parts antagonistic microorganisms, by weight. In one preferred embodiment the inventive formulation comprises about 3 parts kaolin clay, about 1 part yeast extract, about 1 part calcium-source material, about 1 part Yucca extract, and about 0.04 parts antagonistic microorganisms, by weight.

### 2. Antagonstic Microorganisms.

The formulations according to various embodiments include at least one antagonistic microorganism. In the most preferred embodiments, the antagonistic microorganism may comprise one or more bacteria or one or more fungi.

### a) Beneficial Bacteria.

In embodiments, the antagonistic microorganism may comprise beneficial bacteria. Beneficial bacteria are bacteria which favorably impact the health of a given plant under a given set of environmental conditions or in response to given realized or potential threat to the health of the plant. Beneficial bacteria may positively impact plant health by a variety of mechanism including, but not limited to: occupying a growth space otherwise occupied by a pathogen; creating a micro-environment which disfavors the colonization, growth or development of at least one plant pathogen; providing at least one compound that is usefully to the health of the plant; providing an increase in the uptake of plant nutrients and minerals; binding to receptors on the surface to the plant that would otherwise be occupied by at least one plant pathogen; directly or indirectly contributing to the well being of other beneficial organisms; and any combination of the aforementioned mechanisms.

Examples of beneficial bacteria include, but are not limited to *Azotobactor chroococcum, Azobacter polymyxa, Azobacter vinleandii, Bacillus amyloliquefaciens, Bacillus azotoformans, Bacillus coagulans, Bacillus fluorescens, Baccillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenbacillius polymyxa, Pseudomonas aureofaceans, Pseudomonas fluorescens, Pseudomonas monteilii, Streptomyces griseoviridis, Streptomyces lydicus,* and mixtures thereof.

In embodiments the antagonistic microorganism comprises a mixture of bacteria from the group consisting of: *Azotobactor chroococcum, Azobacter polymyxa, Bacillus amyloliquafacians, Bacillus azotofomrans, Bacillus coagulans, Baccillus licheniformis, Bacillus megaterium, Bacillus pumulis, Bacillus stearothermophilis, Bacillus subtilus, Bacillus thurengiensis, Deinococcus erythromyxa, Paenibaccillus durum, Paenibaccillus gordonae, Paenbacillius polymyxa, Pseudomonas aureofaceans,* and *Pseudomonas fluorescence,* and mixtures thereof. The mixture of bacteria is preferably included in the formulation in the following amount: about 3 parts Kaolin clay, about 1 part yeast extract, about 1 part calcium-source material, about 1 part Yucca extract, and about 0.04 parts bacteria mixture, by weight.

In other embodiments the antagonistic microorganism comprises *Bacillus pumilus, Bacillus lichenformis, Bacillus subtilis, bacillus amyloliquefaciens and Bacillus fluorescens (putida).*

### b) Beneficial Fungi.

The formulations according to various embodiments may include at least one beneficial fungal species. Beneficial fungi are fungi which favorably impact the health of a given plant under a given set of environmental conditions or in response to given realized or potential threat to plant health. Beneficial fungi, positively impact plant health by a variety of mechanism including, but not limited to: occupying a growth space otherwise occupied by a potential pathogen; creating a micro-environment which disfavors the colonization, growth or development of at least one plant pathogen; providing at least one compound that is usefully to the health of the plant; providing an increase in the uptake of plant nutrients and minerals; binding to receptors on the surface to the plant that would otherwise be occupied by at least one plant pathogen; directly or indirectly contributing to the well being of other beneficial organisms; and any combination of the aforementioned mechanisms.

Examples of beneficial fungi include, but are not limited to *Laccaria bicolor, Laccaria butilus, Laccaria laccata, Paenibacillus polymyxa, Paenibacillus durum, Pisolitus tinctorius, Rhizopongon ellanae, Rhizopogon rubescens, Rhizopogon subscaerlescens, Rhzopogon vulgaris, Scleroderma cepa and S. citrinum.*

The antagonistic microorganism may be a yeast. For example, the antagonistic microorganism may comprise one or more beneficial yeasts selected from the group consisting of. *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp; and Hansenula spp.* In other embodiments the antagonistic microorganism may be comprises the yeast *Candida saitoana* and/or the yeast *Saccharomyces cervisiae.*

### 3. Other Additives.

The formulations according to various embodiments may also include at least one microorganism that is involved in nutrient cycling. Nutrients cycled by a given microorganism may benefit a plant by, for example, directly supply the plant with at least one useful compound, or by supplying other useful microorganisms in the microenvironment with at least one necessary or useful compound. Additional benefits from nutrient recycling may include replenishing at least one compound that adversely affects the health or survival of at least one plant pathogen. It is to be understood that a given microorganisms may simultaneously perform more than one of the aforementioned functions in a given microenvironment.

The formulations according to various embodiments may include a carbon source such as simple or complex carbohydrates, and/or a nitrogen source such as ammonia. Phosphates, such as potash, may also be included.

The formulations according to various embodiments may also include an additional component to act as a sticking agent. A sticking agent is a compound that has as at least one its characteristics the ability to adhere to a surface structure of a plant or to at least one other component in a given formulation. Suitable sticking agents include, but are not limited to additional yucca plant extracts, additional clays, and fine wet-able powders. Sticking agents can be included in amounts up to about 12 wt % of the total weight of a ready to use formulation.

The formulations according to various embodiments may also include at least one additional component that helps to protect the components of the formulation from the damaging effects of ultraviolet (UV) radiation, or from rapid desiccation. These compounds include, but are not limited to fine clays, aluminum oxide, zinc oxide, aluminum silicate and the like.

The formulations according to various embodiments may also include at least one wetting agent. A wetting agent promotes the dispersal of the formulation in an aqueous environment. Wetting agents may also promote a more even, more efficient spreading of various components in the formulation onto above ground plant structures including, but not limited to, leaves, stems, petioles, bark, blossoms, fruits and the like.

In embodiments the formulation can also include a nutrient. Preferably the nutrient is selected for its ability to enhance the stability, longevity and/or propagation of the beneficial bacteria, fungi, plant structure or root plant. Examples of nutrients for use with the present invention includes, but are not limited to humic acids, sugars, dextrins (particularly maltodextrin), dextrose, and dried yeast, or yeast extract. The nutrients can be added in amounts ranging between about 1 wt % and about 15 wt %, based upon the total weight of the formulation.

The formulation can also include one or more emulsifying agents known to those skilled in the art.

The plant pathogen control or suppression formulation can also include a surfactant. Surfactants can be used in the formulation including the anionic, cationic, and/or non-ionic types. Examples of surfactants include but are not limited to: aliphatic sulfonic ester salts like lauryl sulfate, aromatic sulfonic acid salts, salts of lignosulfates, and soaps. Examples of nonionic surfactants are the condensation products of ethylene oxide with fatty alcohols such as oleylalcohol, alkyl phenols, lecithins, and phosphorylated surfactants, such as phosphorylated ethylene oxide/propylene oxide block copolymer and ethoxylated and phosphorylated styryl-substituted phenol. Additional surfactants are anionic wetting agents, such as sodium salts of sulfated alkyl carboxylate, and/or alkyl naphtalenesulphonate, and/or dispersing agents such as naphthalene formaldehyde condensate

The formulation can also include a variety of other ingredients such as vitamins and minerals. Examples of vitamins for use in the composition include but are not restricted to the following: biotin, folic acid, vitamins A, B, B2, B3, B6, B7, B12, C, D, E, and K, as well as folic acid and/or humic acid.

Minerals that may enhance the growth of the plant and/or promote the performance of the antagonistic microorganism may also be included. Also, one or more metals, such as iron, potassium, sulfur, magnesium, boron, manganese, and zinc, and/or other trace metals, may be included in the inventive formulations and methods.

### 4. Methods and Timing of Application.

In embodiments, the method for treating a plant includes a spray or drench application of an aqueous preparations of a formulation for the control or suppression of a plant pathogen to the exposed surfaces of a plant, i.e., any part of the plant extending above ground. This includes the undersides, top, or side surfaces of leaves, stems, trunk bark, buds, blossoms, flowers, fruits and the like, or parts thereof.

Other embodiments include a spray or drench application about the locus of the plants including, for example, spraying the ground around the plant, particularly from the trunk or stem out to the drip line and/or injecting an aqueous solution of the control formulation into the ground around or under the plants or near the plant roots.

In embodiments, an application of a formulation for the control or suppression of a plant pathogen can include dusting the exposed portions of a plant with a solid or powdered composition comprising the formulation. Still other embodiments include applying the powdered composition to the ground around the plants or in the ground under the plants.

The spraying primarily of a liquid preparation of the formulation can be accomplished by a variety of methods including, but not limited to, blast sprayers, hose reel and hand gun, walking sprays, aerial sprays and the like.

Embodiments provide formulations for the prophylactic treatment of plants prior to exposure to an infectious agent or after confirmed or suspected exposure but before the plant become symptomatic for an infection. Still other embodiments provide control of a pathogen by applying the formation to plants, which exhibit the symptoms and/or other evidence of infection of bacterial or fungal plant pathogens. Still other embodiments can control an infestation of plant pathogen by reducing the amount of damage done to the plant and by at least slowing the rate at which the infestation spreads to other parts of the host plant.

For suppression of a plant pathogen a prophylactic treatment application can be made before the first signs of infestation or when environmental conditions appear to favor an outbreak.

In embodiments, the inventive formulations are provided as an aqueous ready-to-use spray formulation that is applied prophylactically before the first appearance of flower or in early to full bloom. The prophylactic treatment can be repeated as desired or deemed expedient based upon the environmental conditions and/or the observance of bacterial infestation of neighboring plants, fields or orchards.

In embodiments, the booster formulations and antagonistic microorganisms of the present invention are used to treat and suppress fire blight. However, when treating for blossom blight, it is preferred not to treat during flower, and instead to treat before flower and/or after flower petal drop, or on stems when new growth is occurring. In embodiments the treatment is given three to five times, 10 to 14 days apart, for suppression on stems, shoots, trunks and the like. Treatment during flowering may be used for fruit crops such as strawberries.

In embodiments, the application sequence includes at least a first application to the plants at the early flower stage, including for example, the appearance of first stamen to full bloom. The treatment regime can also include at least one additional application as necessary to control an infection or threat of infection. Appropriate additional applications can be made, for example, at about 2/3 flower or within 7 to 14 days of the first application, or longer depending upon the particular formulation used, environmental conditions and overall health and susceptibility of the plants.

Embodiments provide a formulation for the control or suppression of a pathogen that extends the period of time over which the formulation is effective.

In other embodiments, a control formulation is applied no later then about 2 weeks prior to harvesting edible fruit. In other embodiments the inventive formulation is applied to a plant at harvest to control post-harvest rot.

In embodiments a formulation for the control or suppression of a pahogen includes at least one beneficial bacteria species. In still other embodiments a given formulation may include, for example, three, four, five, ten, or more different beneficial bacterial species admixed together along with sufficient nutrients. The formulation includes the beneficial bacteria species in an amount sufficient to control or suppress infestation with a bacterial or fungal pathogen in plants. Formulations intended for above ground use, generally include only ecto mycorrhizal species of fungi.

In embodiments the formulation can includes between about 1.0x10⁷ cfu and about 1.0x10¹¹ cfu of a single beneficial bacterial species per gal. (2.5x10⁹ cfu/gal.). In other embodiments the ready-to-use formulation includes between about 1.0x10⁸ cfu and about 1.0x10¹⁰ cfu of a single bacterial species per gal. In other embodiments the antagonistic microorganism is a bacteria that is included in an amount of about 1 x 10⁹ CFU/g. It will be understood that the ready-to-use formulation can include a number of different bacterial species each included in the above prescribed, approximate amounts.

As with the bacterial species, a given control or suppression formulation can include more than one fungal species, for example, the control formulation may include two, three, four, five or ten or more different species of fungus. The different fungus species can include either endo mycorrhizae or ecto mycorrhizae species, each included fungus species can be included in an amount sufficient to provide at least one beneficial effect to the plant.

In embodiments, a ready-to-use formulation can contain between about 1.0 x 10⁵ cfu/gal and about 1.0 x 10⁹ cfu/gal of a single fungus per gal. (7.5x10⁷ cfu per gal.). More preferably the ready-to-use formulation can include between about 1.0 x 10⁶ cfu/gal and about 1.0 x 10⁸ cfu/gal of a single fungus per gal. It will be understood that the ready-to-use formulation can include a number of different fungi, each included in the above prescribed, preferred amounts.

Still other embodiments include within their scope the dusting or application of a plant pest control formulation or solid mixture that includes at least one beneficial bacteria, one beneficial fungi, nutrients for the beneficial microorganism, and a fine clay such as Kaolin clay, which may extend the useful half-life of the formulation.

In the powdered mixture various carriers or fillers can be added. Examples of carriers or fillers include, but are not limited to, aluminum silicate, aluminum oxide, attaclay, bentonite, bole, calcium carbonate, calcium sulfate, celite, chalk, diatomaceous earth, dolomite, Fuller's earth, gypsum, Kaolin clay, kieselguhr, lime, limestone, magnesia (powdered), magnesium oxide, pyrophyllite, silica gels, silicates, silicic acid, silicium oxide, and/or talc and mixtures thereof.

Embodiments include within their scope a concentrated formulation for the control or suppression of a plant pathogen. The concentrated formulation can be either a solid (powdered or granulated) mixture or a concentrated, aqueous mixture. The concentrate can include any or all of the above described ingredients. The concentrated formulation may include the ingredients described in the above in amounts of between about 2 to about 10 fold of the amounts specifically described herein. In use, the concentrate can be admixed with water to provide the ready-to-use formulation.

Embodiments provide a method for treating plants including fruiting plants, ornamental plants and deciduous plants to control and halt the spread of bacterial pathogens including, for example, fire blight (*Erwinia amylovora*). Embodiments include treating the plants either prophylactically or after observance of infestation of the fire blight bacteria by applying a formulation for the control of the effects of the microorganism.

The application sequence when used as an aqueous formulation for the control of a plant pathogen such as fire blight includes applying a sufficient amount of the formulation to reduce the amount of damage done by the infection relative to plants similarly situated and not treated with the formulation. In embodiments the ready-to-use spray formulation is applied in an amount sufficient to thoroughly wet or coat the leaves, flowers, stem, bark, trunk and the like without significant run off of the sprayed material. In embodiments at least one additional application of the formulation may be made as necessary to control the pathogen.

For the purpose of promoting further understanding and appreciation of the present invention and its advantages, the following Examples are provided. It will be understood, however, that these Examples are illustrative and not limiting in any fashion.

### EXAMPLES 1-7

Multiple field trials were performed to test the efficacy of different formulations of the inventive compositions for plant disease control. Trials were conducted and disease reductions were noted in grape and turf, and yield enhancements were seen in tomato and strawberry, compared to the negative controls. Further trials were conducted and disease reductions were noted in apple, tomato, crabapple, grape, and turf. In total, 10 trials were conducted, and disease reductions relative to the negative controls were noted in 7 trials. Overall, plant disease suppression is generally indicated by the data.

### Formulation Descriptions:

All formulations were prepared from Kaolin clay, yeast extract, a calcium source material, Yucca extract, and a microbe mix. The microbe mix contained: *Bacillus licheniformis, Bacillus azotofomrans, Bacillus megaterium, Bacillus coagulans, Bacillus pumulis, Bacillus thurengiensis, Bacillus stearothermophilis, Bacillus subtilus, Bacillus amyloliquafacians, Paenbacillius polymyxa, Paenibaccillus gordonae, Paenibaccillus durum, Azobacter polymyxa, Azotobactor chroococcum, Sacchromyces cervisiae, Pseudomonas aureofaceans, Pseudomonas fluorescence, Deinococcus erythromyxa*

For wettable powders, the components were combined in a ratio of 3:1:1:1:0.04 by weight (components in the order given above). The standard 1X rate was 3.2 to 6.4 g per liter spray, or approximately 12 to 24 g per gallon of spray.

For liquid concentrates (LC), a base mix of Kaolin clay, yeast extract, and a calcium source material was prepared in the ratio of 3:1:1. A 40X liquid concentrate was prepared using 200 g of this base mix and combining that with 40 ml of the soluble portion of a 1:10 suspension of yucca extract (e.g. 50 g per 500 ml of water was prepared and allowed to settle at room temperature for at least 30 minutes), and bringing to a final volume of 1 liter. In some formulations soybean oil was added at a rate of 15 ml per liter of concentrate. The solutions were mixed and sterilized by autoclaving, and allowed to cool to room temperature. To this solution, 16 g of microbe mix per liter were added and mixed to complete the 40X liquid concentrate solution.

All formulations were stored at room temperature prior to analysis.

### Test Results:

The following are summary results from the seven field trials of the inventive compositions and methods. The product was formulated with calcium glucoheptonate (BP), calcium chloride (BP1), or calcium carbonate (BP2) as the calcium source material. Trials were conducted using natural disease pressure, except in Grape test 1 where inoculum was introduced into the plots. The trials were conducted by multiple independent investigators, hence the different rating scales. NC indicates the negative control, comprising water or no treatment, depending on the test.
1. Effect on median disease incidence (n=4, 0-100%scale) for **black rot on grape.**

**Fruit infection**

| | |
|---|---|
| BP | 83 |
| NC | 92 |

2. Effect on median number (n=6 reps) of **dollar spot lesions on turf** at three different time points.

| | Jun26 | Jul11 | Jul31 |
|---|---|---|---|
| BP1 | 21 | 59 | 56 |
| NC | 46 | 48 | 86 |

3. Effect on median disease incidence (n=4, 0-100% scale) of foliar apple scab on fruit trees.

| | cv. McIntosh | cv. Red Delicious |
|---|---|---|
| BP1 | 66 | 64 |
| NC | 96 | 90 |

4. Effect on median disease rating (n=4 trees, 1-5 scale) of scab on **crabapple** foliage cv. *Malus* x 'Sutyzam' Sugar Tyme™.

| | Jun29 | Jul22 | Aug27 |
|---|---|---|---|
| BP1 | 2.0 | 3.0 | 4.0 |
| NC | 3.0 | 4.0 | 5.0 |

5. Effect on median incidence (n=4 reps; 0-200 scale) of postharvest **Botrytis infections on grape** pre- and post-incubation under disease conducive storage conditions.

| | Pre-incubation | Post-incubation |
|---|---|---|
| BP1 | 0.40 | 1.98 |
| BP2 | 0.03 | 2.83 |
| NC | 0.50 | 5.98 |

6. Effect on severity of **late blight on tomato** foliage (n=4 reps; 0-100 %scale).

| | % disease | AUDPC |
|---|---|---|
| BP1 | 79 a | 299 |
| NC | 99 c | 375 |

7. Effect on median number (n=6 reps) of **dollar spot lesions on turf** at three different time points.

| | Jul13 | Aug3 | Aug27 |
|---|---|---|---|
| BP1 | 21.0 | 46.5 | 108.0 |
| BP2 | 16.5 | 34.0 | 44.0 |
| NC | 29.0 | 54.5 | 110.0 |

### EXAMPLE 8

The ability of the inventive booster formulation to improve the performance of an antagonistic microorganism was tested using the antagonistic microorganism *Monilinia fructicola.* The test was to see if the inventive booster formulation improves the ability of *M. fructicola* to inhibit post-harvest rotting of citrus.

A booster formulation was prepared according to the following formula (per 500 ml of booster formulation):
1.18 g Kaolin
0.39 g CaCO₃
0.39 g Yeast extract
0.39 g Yucca

The booster formulation was applied in 10 µl treatments. After 2 hours, the plants were inoculated with *P. digitatum*. Disease incidence was investigated from 4 days to 6 days. The incidence represented the percentage of fruit displaying rot

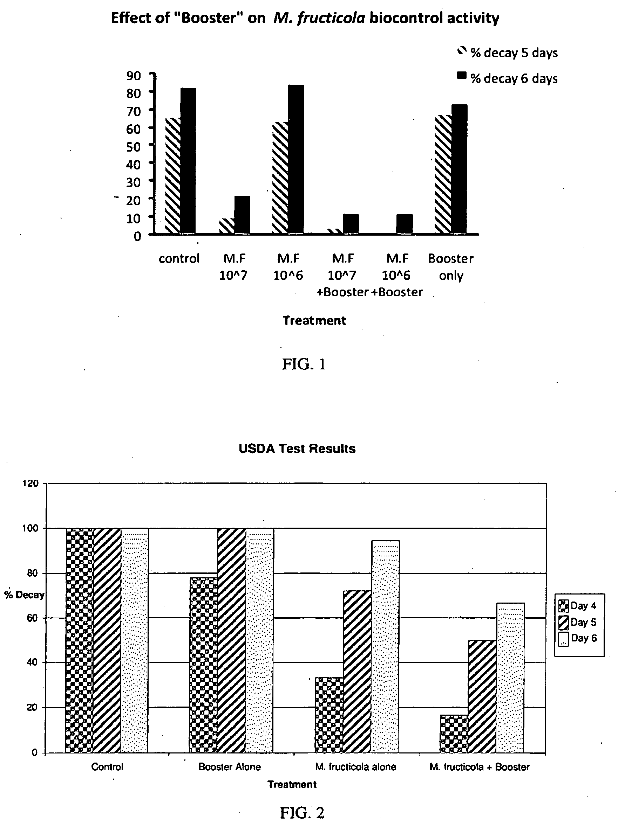

FIG. 1 shows that the inventive booster formulation improves the ability of *M. fructicola* to inhibit post-harvest rotting of citrus.

It can be seen from FIG. 1 that the inventive booster formulation improves the ability of the antagonistic microorganism *Monilinia fructicola* to inhibit post-harvest rotting of citrus. In the replicates using the booster formulation alone, decay at day 5 was approximately 65%, and decay at day 6 was approximately 83%. In the replicates with *Monilinia fructicola* alone, the use of 10⁶ *M. fructicola* did not significantly reduce decay, and the use of 10⁷ *M. fructicola* reduced the incidence of decay to about 10% on day 5 and to slightly more than about 20% on day 6. However, when the booster formulation was used with 10⁶ *M. fructicola,* decay was reduced to about zero on day 5 and to about 10% by day 6. In the replicates using 10⁷ *M. fructicola* with the booster formulation, decay was reduced to less than about 5% on day 5 and to about 10% by day 6. Accordingly, the use of the inventive booster formulation improved the ability of *M. fructicola*to inhibit decay in citrus, and made it possible to use ten times less *M. fructicola* and still obtain good performance.

### EXAMPLE 9

The ability of the inventive booster formulation to improve the performance of an antagonistic microorganism was tested using the antagonistic microorganism *Monilinia fructicola.* The test was to see if the inventive booster formulation improves the ability of *M. fructicola* to inhibit post-harvest rotting of apples.

A booster formulation was prepared according to the following formula (per 500 ml of booster formulation):
1.18 g Kaolin
0.39 g CaCO₃
0.39 g Yeast extract
0.39 g Yucca

The booster formulation was applied in 10 µl treatments. After 2 hours, the plants were inoculated with *P. expansum* (10 µl, 1x105 spores/ml). Disease incidence was investigated from 4 days to 6 days. The incidence represented the percentage of fruit displaying rot.

FIG. 2 shows that the inventive booster formulation improves the ability of *M. fructicola* to inhibit post-harvest rotting of apples.

It can be seen from FIG. 2 that the inventive booster formulation improves the ability of the antagonistic microorganism *Monilinia fructicola* to inhibit post-harvest rotting of apples. In the replicates using the booster formulation without *Monilinia fructicola,* there was little affect on rotting at day 4 and no affect on rotting by day 6. In the replicates using *M. fructicola* without the booster formulation, there was some positive affect on rotting for days 4-6. When *M*. *fructicola* was used without the booster formulation, rotting was at about 30% on day 4 and about 90% by day 6. But in the replicates using *M. fructicola* with the booster formulation, there was a significant positive affect on rotting for all days tested. In that case, rotting was reduced to under 20% on day 4, and less than 70% on day 6.

## Claims

1. A method for improving the ability of an antagonistic microorganism to prevent, suppress, treat or control disease or decay in plants, including their fruits and/ or harvestable parts, the method comprising contacting a plant with a formulation comprising an antagonistic microorganism and a booster composition, **characterized in that** said booster composition comprises:
a) 2 to 4 parts Kaolin clay;
b) 1 to 1.5 parts yeast;
c) 1 to 1.5 parts Yucca plant extract; and
d) 1 to 1.5 parts calcium-source material.

2. A method according to claim 1, comprising about 3 parts Kaolin clay, about 1 part yeast, about 1 part Yucca plant extract, and about 1 to 1.5 parts calcium-source material.

3. A method according to claim 1 wherein the method comprises contacting the plant with a formulation comprising about 3 parts Kaolin clay, about 1 part yeast extract, about 1 part calcium-source material, about 1 part Yucca extract, and about 0.04 parts antagonistic microorganisms, by weight.

4. A method according to any one of claims 1 to 3, wherein the booster composition comprises:
a) 30 to 60 wt.% Kaolin clay;
b) 15 to 20 wt.% yeast;
c) 15 to 20 wt.% Yucca plant extract; and
d) 15 to 20 wt.% calcium-source material.

5. A method according to any of claims 1-4 wherein the formulation is dispersed in an aqueous preparation and includes between 0.68 and 4.54 kg (1.5 and 10 pounds) of Kaolin clay per 378.54 L (100 gallons) of aqueous preparation.

6. A method according to any of claims 1-5 wherein the calcium source material comprises a calcium salt.

7. A method according to claim 6 wherein said calcium salt comprises calcium glucoheptonate, calcium chloride, calcium sulfate, or calcium carbonate.

8. A method according to claim 7 wherein said calcium salt comprises calcium glucoheptonate

9. A method according to any of claims 1-8 wherein the antagonistic microorganism comprises:
one or more beneficial bacteria; and/or
one or more beneficial fungi; and/or
one or more beneficial yeasts.

10. A method according to any of claims 1-9 wherein the one or more beneficial bacteria comprises one or more beneficial bacteria selected from the group consisting of: *Azotobactor chroococcum, Azobacter polymyxa, Azobacter vinleandii, Bacillus amyloliquefaciens, Bacillus azotoformans, Bacillus coagulans, Bacillus fluorescens, Bacillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenbacillius polymyxa*, *Pseudomonas aureofaceans, Pseudomonas fluorescens, Pseudomonas monteilii, Streptomyces griseoviridis,* and *Streptomyces lydicus.*

11. A method according to claim 9 wherein the one or more beneficial fungi comprises *Monilinia fructicola.*

12. A method according to claim 9 wherein the one or more beneficial yeasts comprises one or more beneficial yeasts selected from the group consisting of. *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp; and Hansenula spp.*

13. A method according to any of claims 1-12 wherein said formulation is applied to a plant pre-harvest.

14. A method according to any of claims 1-13 wherein said formulation is applied to a plant post-harvest.

15. A formulation effective for preventing, suppressing, treating or controlling disease or decay in plants, including their fruits and/or harvestable parts; said formulation comprising an antagonistic microorganism and a booster composition, **characterized in that** said booster composition comprises:
a) 2 to 4 parts Kaolin clay;
b) 1 to 1.5 parts yeast;
c) 1 to 1.5 parts Yucca plant extract; and
d) 1 to 1.5 parts calcium-source material.

## Patentansprüche

1. Verfahren zum Verbessern der Fähigkeit eines antagonistischen Mikroorganismus, Krankheit oder Zerfall bei Pflanzen, einschließlich ihrer Früchte und/oder erntbaren Teile, zu verhindern, zu unterdrücken, zu behandeln oder zu kontrollieren, wobei das Verfahren das Kontaktieren einer Pflanze mit einer Formulierung umfasst, die einen antagonistischen Mikroorganismus und eine Booster-Zusammensetzung umfasst, **dadurch gekennzeichnet, dass** die Booster-Zusammensetzung Folgendes umfasst:
a) 2 bis 4 Teile Kaolinton;
b) 1 bis 1,5 Teile Hefe;
c) 1 bis 1,5 Teile Yuccapflanzenextrakt; und
d) 1 bis 1,5 Teile Calciumquellenmaterial.

2. Verfahren nach Anspruch 1, umfassend etwa 3 Teile Kaolinton, etwa 1 Teil Hefe, etwa 1 Teil Yuccapflanzenextrakt und etwa 1 bis 1,5 Teile Calciumquellenmaterial.

3. Verfahren nach Anspruch 1, wobei das Verfahren das Kontaktieren der Pflanze mit einer Formulierung umfasst, die etwa 3 Gewichtsteile Kaolinton, etwa 1 Gewichtsteil Hefeextrakt, etwa 1 Gewichtsteil Calciumquellenmaterial, etwa 1 Gewichtsteil Yuccaextrakt und etwa 0,04 Teile antagonistische Mikroorgansimen umfasst.

4. Verfahren nach einem der Ansprüche 1 bis 3, wobei die Booster-Zusammensetzung Folgendes umfasst:
a) 30 bis 60 Gew.-% Kaolinton;
b) 15 bis 20 Gew.-% Hefe;
c) 15 bis 20 Gew.-% Yuccapflanzenextrakt; und
d) 15 bis 20 Gew.-% Calciumquellenmaterial.

5. Verfahren nach einem der Ansprüche 1 bis 4, wobei die Formulierung in einer wässrigen Zubereitung dispergiert ist und zwischen 0,68 und 4,54 kg (1,5 und 10 Pfund) Kaolinton pro 378,54 I (100 Gallonen) wässriger Zubereitung umfasst.

6. Verfahren nach einem der Ansprüche 1 bis 5, wobei das Calciumquellenmaterial ein Calciumsalz umfasst.

7. Verfahren nach Anspruch 6, wobei das Calciumsalz Calciumglucoheptonat, Calciumchlorid, Calciumsulfat oder Calciumcarbonat umfasst.

8. Verfahren nach Anspruch 7, wobei das Calciumsalz Calciumglucoheptonat umfasst.

9. Verfahren nach einem der Ansprüche 1 bis 8, wobei der antagonistische Mikroorganismus Folgendes umfasst:
ein oder mehrere nützliche Bakterien; und/oder
ein oder mehrere nützliche Pilze; und/oder
ein oder mehrere nützliche Hefen.

10. Verfahren nach einem der Ansprüche 1 bis 9, wobei das eine oder die mehreren nützlichen Bakterien eine oder mehrere nützliche Bakterien umfasst/umfassen, die ausgewählt sind aus der Gruppe bestehend aus: *Azotobacter chroococcum, Azobacter polymyxa, Azobacter vinleandii, Bacillus amyloliquefaciens, Bacillus azotoformans, Bacillus coagulans, Bacillus fluorescens, Baccillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenibacillus polymyxa, Pseudomonas aureofaceans, Pseudomonas fluorescens, Pseudomonas monteilii, Streptomyces griseoviridis* und *Streptomyces lydicus.*

11. Verfahren nach Anspruch 9, wobei der eine oder die mehreren nützlichen Pilze *Monilinia fructicola* umfasst/umfassen.

12. Verfahren nach Anspruch 9, wobei die eine oder mehreren nützlichen Hefen eine oder mehrere nützlichen Hefen umfasst/umfassen, die ausgewählt sind aus der Gruppe bestehend aus: *Candida spp; Cryptococcus spp; Pichia spp; Debaryomyces spp; Bulleromyces spp; Sporobolomyces spp; Rhodotorula spp; Aureobasidium spp; Issatchenkia spp; Zygosaccharomyces spp; Dekkera spp;* und *Hansenula spp.*

13. Verfahren nach einem der Ansprüche 1 bis 12, wobei die Formulierung vor der Ernte auf eine Pflanze aufgebracht wird.

14. Verfahren nach einem der Ansprüche 1 bis 13, wobei die Formulierung nach der Ernte auf eine Pflanze aufgebracht wird.

15. Formulierung, die zum Verhindern, Supprimieren, Behandeln oder Kontrollieren von Krankheit oder Zerfall bei Pflanzen, einschließlich ihrer Früchte und/oder erntbaren Teile, wirksam ist; wobei die Formulierung einen antagonistischen Mikroorganismus und eine Booster-Zusammensetzung umfasst, **dadurch gekennzeichnet, dass** die Booster-Zusammensetzung Folgendes umfasst:
a) 2 bis 4 Teile Kaolinton;
b) 1 bis 1,5 Teile Hefe;
c) 1 bis 1,5 Teile Yuccapflanzenextrakt; und
d) 1 bis 1,5 Teile Calciumquellenmaterial.

## Revendications

1. Procédé pour améliorer la capacité d'un microorganisme antagoniste à prévenir, supprimer, traiter ou commander une maladie ou la pourriture de végétaux, y compris leurs fruits et/ou parties pouvant être récoltées, le procédé comprenant la mise en contact d'un végétal avec une formulation comprenant un microorganisme antagoniste et une composition de renfort, **caractérisé en ce que** ladite composition de renfort comprend :
a) 2 à 4 parties d'argile Kaolin ;
b) 1 à 1,5 partie de levure ;
c) 1 à 1,5 partie d'extrait végétal de Yucca ; et
d) 1 à 1,5 partie d'une matière source de calcium.

2. Procédé selon la revendication 1, comprenant environ 3 parties d'argile Kaolin, environ 1 partie de levure, environ 1 partie d'extrait végétal de Yucca, et environ 1 à 1,5 partie de matière source de calcium

3. Procédé selon l'une quelconque des revendications 1-2, dans lequel le procédé comprend la mise en contact du végétal avec une formulation comprenant environ 3 parties d'argile Kaolin, environ 1 partie d'extrait de levure, environ 1 partie d'extrait de Yucca, et environ 0,04 partie de microorganismes antagonistes, en poids.

4. Procédé selon l'une quelconque des revendications 1 à 3, dans lequel la composition de renfort comprend :
a) 30 à 60 % en poids d'argile Kaolin ;
b) 15 à 20 % en poids de levure ;
c) 15 à 20 % en poids d'extrait végétal de Yucca ; et
d) 15 à 20 % en poids d'une matière source de calcium.

5. Procédé selon l'une quelconque des revendications 1 à 4, dans lequel la formulation est dispersée dans une préparation aqueuse, et comprend entre 0,68 et 4,54 kg (1,5 et 10 livres) d'argile Kaolin pour 378,54 1 (100 gallons) de préparation aqueuse.

6. Procédé selon l'une quelconque des revendications 1 à 5, dans lequel la matière source de calcium comprend un sel de calcium.

7. Procédé selon la revendication 6, dans lequel ledit sel de calcium comprend du glucoheptonate de calcium, du chlorure de calcium, du sulfate de calcium ou du carbonate de calcium.

8. Procédé selon la revendication 7, dans lequel ledit sel de calcium comprend du glucoheptonate de calcium.

9. Procédé selon l'une quelconque des revendications 1 à 8, dans lequel le micro-organisme antagoniste comprend :
une ou plusieurs bactéries bénéfiques ; et/ou un ou plusieurs champignons bénéfiques ; et/ou une ou plusieurs levures bénéfiques.

10. Procédé selon l'une quelconque des revendications 1 à 9, dans lequel les une ou plusieurs bactéries bénéfiques comprennent une ou plusieurs bactéries bénéfiques choisies dans le groupe constitué par : *Azotobactor chroococcum, Azobacter polymyxa, Azobacter vinleandii, Bacillus amyloliquefaciens, Bacillus azotoformans, Bacillus coagulans, Bacillus fluorescens, Baccillus licheniformis, Bacillus megaterium, Bacillus polymyxa, Bacillus pumilis, Bacillus sterotermophilis, Bacillus subtilis, Bacillus thuringiensis, Deinococcus erythromyxa, Paenibacillus azotofixans, Paenibacillus durum, Paenibaccillus gordonae, Paenbacillius polymyxa, Pseudomonas aureofaceans, Pseudomonas fluorescens, Pseudomonas monteilii, Streptomyces griseoviridis,* et *Streptomyces lydicus.*

11. Procédé selon la revendication 9, dans lequel les un ou plusieurs champignons bénéfiques comprennent *Monilinia fructicola.*

12. Procédé selon la revendication 9, dans lequel les unes ou plusieurs levures bénéfique comprennent une ou plusieurs levures bénéfiques choisies dans le groupe constitué par *Candida spp ; Cryptococcus spp ; Pichia spp ; Debaryomyces spp ; Bulleromyces spp ; Sporobolomyces spp ; Rhodotorula spp ; Aureobasidium spp ; Issatchenkia spp ; Zygosaccharomyces spp ; Dekkera spp ;* et *Hansenula spp.*

13. Procédé selon l'une quelconque des revendications 1 à 12, dans lequel ladite formulation est appliquée à un végétal avant la récolte.

14. Procédé selon l'une quelconque des revendications 1 à 13, dans lequel ladite formulation est appliquée à un végétal après la récolte.

15. Formulation efficace pour prévenir, supprimer, traiter ou commander une maladie ou la pourriture de végétaux, y compris leurs fruits et/ou parties pouvant être récoltées ; ladite formulation comprenant un microorganisme antagoniste et une composition de renfort, **caractérisée en ce que** ladite composition de renfort comprend :
a) 2 à 4 parties d'argile Kaolin ;
b) 1 à 1,5 partie de levure ;
c) 1 à 1,5 partie d'extrait végétal de Yucca ; et
d) 1 à 1,5 partie d'un matériau source de calcium.
